# EUROPEAN PATENT APPLICATION

(11) **EP 4 213 376 A1**
(43) Date of publication of application: **19.07.2023**
(21) Application number: 20952194.7
(22) Date of filing: 27.10.2020
(51) Int. Cl.: H02S 30/10, H02S 20/26

(54) **HIGHLY ADAPTABLE PHOTOVOLTAIC ASSEMBLY FRAME STRUCTURE AND IMPLEMENTATION METHOD THEREFOR**

(30) Priority: 07.09.2020 CN 202010928157
(71) Applicant: Hengdian Group DMEGC Magnetics Co., Ltd., Jinhua, Zhejiang 322118 (CN)
(72) Inventor: LOU, Caoxin, Jinhua, Zhejiang 322118 (CN); HE, Yue, Jinhua, Zhejiang 322118 (CN); WANG, Tingting, Jinhua, Zhejiang 322118 (CN); LI, Chunhui, Jinhua, Zhejiang 322118 (CN); AI, Ruiyang, Jinhua, Zhejiang 322118 (CN); ZHAO, Lin, Jinhua, Zhejiang 322118 (CN); JIN, Shasha, Jinhua, Guangdong 322118 (CN); QIAO, Xu, Jinhua, Zhejiang 322118 (CN)
(74) Representative: Ström & Gulliksson AB
(86) International application number: PCT/CN2020/123916
(87) International publication number: WO 2022/047952

(57) **Abstract**

A highly adaptable photovoltaic assembly frame structure, comprising frame bodies. Each frame body comprises a column (l): the lower end of the column (1) is provided with an insertion block (2); a clamping block (3) is provided on the position, located at one side of the insertion block (2), above the column (l); a clamping groove (4) is formed below the clamping block (3); and a groove (5) is formed above the insertion block (2). Embedded mounting in a building structure is realized by means of the provided insertion block (2) and the groove (5); tooth grooves (21) are formed on the insertion block (2), so that the friction force of a connection can be increased, and the stability of the connection is ensured; embedding a photovoltaic assembly instead of glass into the building structure can improve the aesthetics of the building structure and have good practicability; and a connection cavity (6) used for connection is formed on the column (1), and is used for a corner connection between two frame bodies, so that the connection strength between the frame bodies is enhanced. The present application also relates to an implementation method for the highly adaptable photovoltaic assembly frame structure.

## Description

### Field of the Invention

The present disclosure relates to the technical field of photovoltaic module frames, and particularly to a highly adaptable photovoltaic module frame structure and implementation method thereof.

### Background of the Invention

With vigorous development of China's photovoltaic industry, the power generation efficiency of crystalline silicon photovoltaic modules has increased from 10% at the beginning of the twenty-first century to the current state with a maximum efficiency being > 25%. At the same time, the manufacturing costs have also been declining. At present, crystalline silicon photovoltaic products have decreased by more than 90% in costs as compared to a decade ago. With the improvements of processes and technologies as well as the cost decline, the end-use market is also booming, and photovoltaic products are gradually changing from industrial equipment to civilian products. Building Integrated Photovoltaics (BIPV) is a technology of applying solar power generation (photovoltaic) products to buildings, making full use of the spatial structure of buildings, sheds, and greenhouses, and adding the power generation function on the basis of conventional shading, temperature control, and rain shelter. BIPV has thus become a hot spot in future building and photovoltaic technology market.

Frames are required for installation of photovoltaic modules. In the prior art, photovoltaic module installation frames have some issues in use, for example, the photovoltaic modules cannot be embedded into a building body structure, but only cover the surface of the structure.

### Summary of the Invention

An object of the present disclosure is to provide a highly adaptable photovoltaic module frame structure to solve the problems set forth in the background above. The highly adaptable photovoltaic module frame structure provided by the present disclosure has some characteristics.

Another object of the present disclosure is to provide an implementation method of a highly adaptable photovoltaic module frame structure.

In order to achieve the above objects, the present disclosure provides the following technical solution: a highly adaptable photovoltaic module frame structure includes a frame body, where the frame body includes a post, an insert block is arranged at a lower end of the post, a clamping block is arranged above the post at the same side as the insert block, a clamping slot is arranged below the clamping block, and a groove is arranged above the insert block.

Further in the disclosure, a connection chamber is arranged on the post for connection.

Further in the disclosure, dense teeth are arranged on the insert block for increasing friction.

Further in the disclosure, a support plate is arranged at the other side of the lower end of the post.

Further in the disclosure, a through hole is positioned through the support plate.

Further in the disclosure, a reinforcing rib is connected to the post for increasing strength.

Further in the disclosure, the reinforcing rib has a linear, arc-shaped, or cross-shaped structure.

Further in the disclosure, an arc is arranged below an opening of the clamping slot.

Further in the disclosure, the implementation method of a highly adaptable photovoltaic module frame structure includes the following steps:
(i), the insert block being configured for embedding in a building structure such as a greenhouse, a shed, or a glass house, or configured for positioning of an installation press block, and the groove provides space for installation;
(ii), the teeth being configured for increasing the friction after nesting with a building structure or the friction with the installation press block;
(iii), the reinforcing rib being configured for increasing the mechanical strength of the frame body;
(iv), the support plate being configured for improving the support performance of the frame body; and
(v), the clamping slot being configured for clamping the photovoltaic module.

Further in the disclosure, in the implementation method of a highly adaptable photovoltaic module frame structure, a connection chamber is arranged on the post for connection; dense teeth are arranged on the insert block for increasing friction; a support plate is arranged at the other side of the lower end of the post; a through hole is positioned through the support plate; a reinforcing rib is connected to the post for increasing strength; the reinforcing rib has a linear, arc-shaped, or cross-shaped structure; and an arc is arranged below an opening of the clamping slot.

The present disclosure has following advantageous effects as compared to the prior art:
1, the present disclosure, on the basis of a module installation structure commonly used in the industry, achieves installation embedded in a building structure through the insert block and the groove;
2, the present disclosure arranges teeth on the insert block, which can increase friction of the connection so as to ensure the stability of the connection;
3, the present disclosure enables replacement of glass by photovoltaic modules to be embedded in a building structure, which can improve the aesthetics of the building structure and has good practicality;
4, in the present disclosure, a connection chamber is arranged on the post for connection, and the connection chamber is configured for an angle corner code connection between two frame bodies, thereby enhancing the connection strength between the frame bodies;
5, in the present disclosure, a support plate is arranged at the other side of the lower end of the post, and a through hole is positioned through the support plate, the support plate is configured for improving the support performance of the frame body, and the through hole can be remained for subsequent arrangement and treatment, such as functioning as a grounding hole; and
6, in the present disclosure, a reinforcing rib is connected to the post for increasing strength, and the reinforcing rib is configured for increasing the mechanical strength of the frame body.

### Brief Description of the Drawings

Figs. 1-3 are schematic diagrams showing structures of the present disclosure;
Figs. 4-8 are schematic diagrams showing installation structures of the present disclosure; and
Figs. 9-12 are schematic diagrams showing other forms of structures of the present disclosure.

In the drawings: 1, post; 2, insert block; 21, teeth; 3, clamping block; 4, clamping slot; 5, groove; 6, connection chamber; 7, support plate; 8, reinforcing rib; 9, photovoltaic module; 10, installation rail; 11, installation press block.

### Detailed Description of the Embodiments

The technical solution in the embodiments of the present disclosure will now be described more clearly and fully hereinafter with reference to the accompanying drawings in the embodiments of the present disclosure. It is obvious that the embodiments described are only a few, but not all embodiments of the present disclosure. Based on the embodiments of the present disclosure, all other embodiments obtained by a person of ordinary skill in the art without inventive effort shall fall within the protection scope of the present disclosure.

### Embodiment 1

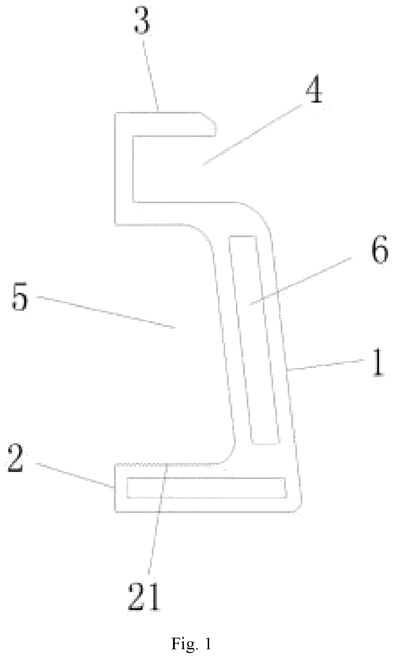

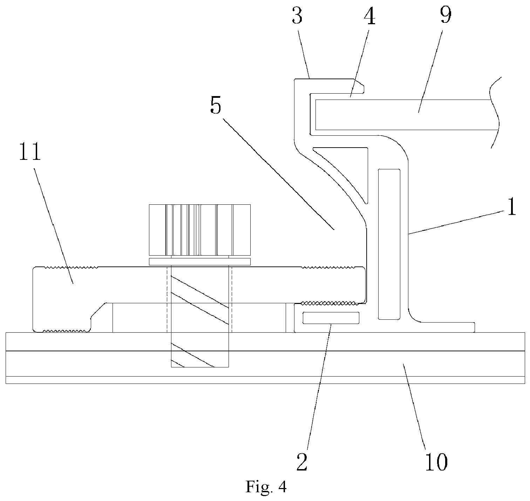

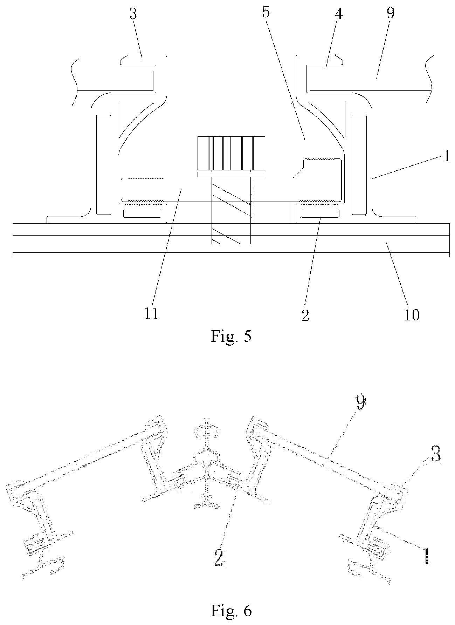

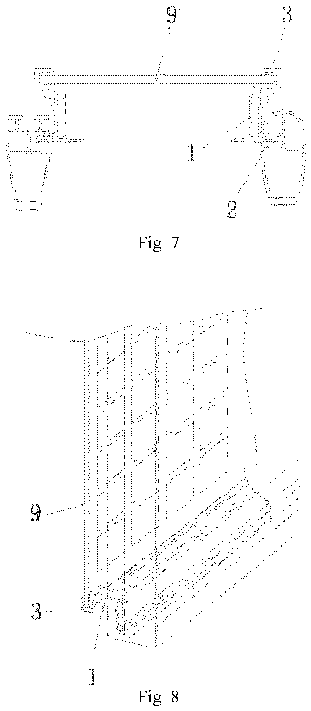

With reference to Figs. 1-7, the present disclosure provides the following technical solution: a highly adaptable photovoltaic module frame structure includes a frame body, where the frame body has an integrated structure and includes a post 1, an insert block 2 is arranged at a lower end of the post 1, a clamping block 3 is arranged above the post 1 at the same side as the insert block 2, a clamping slot 4 is arranged below the clamping block 3, and a groove 5 is arranged above the insert block 2.

By adopting the above technical solution, the insert block 2 is configured for embedding in a building structure such as a greenhouse, a shed, or a glass house, or configured for positioning of an installation press block 11, and the groove 5 provides space for installation.

Further, an arc is arranged below an opening of the clamping slot 4.

By adopting the above technical solution, the arc can avoid flexure of the photovoltaic module 9 when the photovoltaic module 9 is bent under a high load.

### Embodiment 2

The embodiment differs from Embodiment 1 in that a connection chamber 6 is further arranged on the post 1 for connection.

By adopting the above technical solution, the connection chamber 6 is configured for an angle corner code connection between two frame bodies, thereby enhancing the connection strength between the frame bodies.

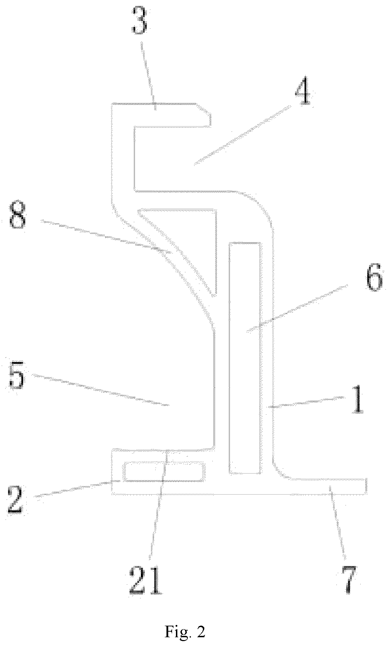

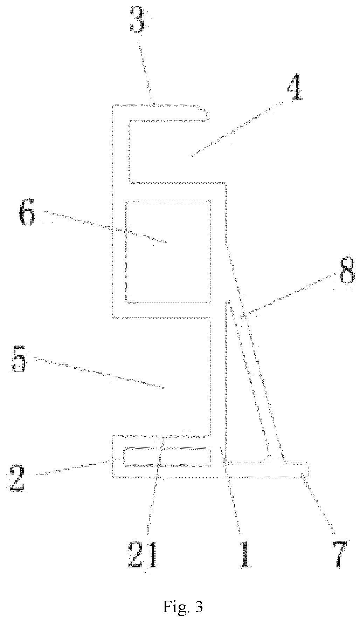

As shown in Fig. 2 or 3, the connection chamber 6 may be arranged at one side of the groove 5 or may be arranged above the groove 5.

### Embodiment 3

The embodiment differs from Embodiment 1 in that dense teeth 21 are further arranged on the insert block 2 for increasing friction.

By adopting the above technical solution, the teeth 21 are configured for increasing the friction after nesting with a building structure or the friction with the installation press block 11. In the embodiment, the teeth 21 are arranged on the upper surface of the insert block 2, and the teeth 21 may also be arranged on the lower surface of the insert block 2 or other corresponding positions.

### Embodiment 4

The embodiment differs from Embodiment 1 in that a support plate 7 is further arranged at the other side of the lower end of the post 1, and a through hole is positioned through the support plate 7.

By adopting the above technical solution, the support plate 7 is configured for improving the support performance of the frame, and the through hole can be remained for subsequent arrangement and treatment, such as functioning as a grounding hole.

### Embodiment 5

The embodiment differs from Embodiment 1 in that a reinforcing rib 8 is further connected to the post 1 for increasing strength, and the reinforcing rib 8 has a linear, arc-shaped, or cross-shaped structure.

By adopting the above technical solution, the reinforcing rib 8 is configured for increasing the mechanical strength of the frame body; as shown in Fig. 1, the reinforcing rib 8 may not be arranged in an environment with low mechanical load requirements; as shown in Fig. 2, the reinforcing rib 8 can be arranged above the groove 5, and the reinforcing rib 8 has an arc-shaped structure; as shown in Fig. 3, the reinforcing rib 8 may be arranged at a side of the post 1 away from the groove 5, and the reinforcing rib 8 has a linear structure.

### Embodiment 6

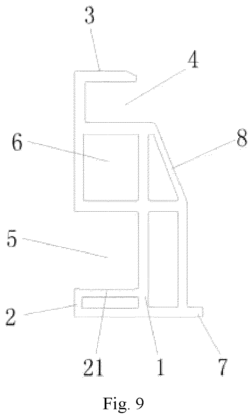

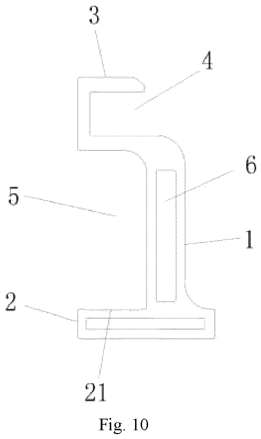

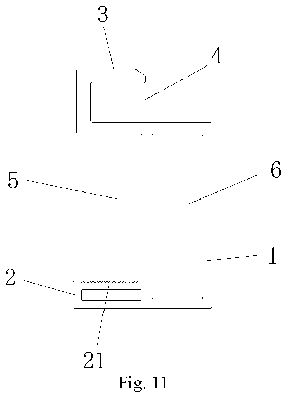

With reference to Figs. 9-12, the embodiment differs from Embodiment 1 in that the frame body may also be configured as shown in Figs. 9-12.

### Embodiment 7

The embodiment differs from Embodiment 1 in that the length of the clamping block 3 is shorter as compared to lengths of clamping blocks in the prior art.

By adopting the above technical solution, it is possible to reduce the insertion depth of the photovoltaic module 9 into the clamping slot 4, thereby avoiding that the clamping slot 4 is so deep that shades the battery chips on the upper surface of the photovoltaic module 9 or the faceted metal frame contacts with the battery chips which causes the battery chips to break.

### Embodiment 8

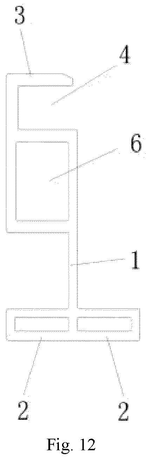

With reference to Fig. 12, the embodiment differs from Embodiment 1 in that insert blocks 2 are arranged at two sides of the lower end of the post 1.

By adopting the above technical solution, the frame body has an increased applicable scope.

Further, the implementation method of a highly adaptable photovoltaic module frame structure described herein includes the following steps.

At (i), the insert block 2 is configured for embedding in a building structure such as a greenhouse, a shed, or a glass house, or configured for positioning of an installation press block 11, and the groove 5 provides space for installation.

At (ii), the teeth 21 are configured for increasing the friction after nesting with a building structure or the friction with the installation press block 11.

At (iii), the reinforcing rib 8 is configured for increasing the mechanical strength of the frame body.

At (iv), the support plate 7 is configured for improving the support performance of the frame body.

At (v), the clamping slot 4 is configured for clamping the photovoltaic module 9.

In summary, the present disclosure achieves installation embedded in a building structure through the insert block 2 and the groove 5; the present disclosure arranges teeth 21 on the insert block 2, which can increase friction of the connection so as to ensure the stability of the connection; the present disclosure enables replacement of glass by photovoltaic modules 9 to be embedded in a building structure, which can improve the aesthetics of the building structure and has good practicality; in the present disclosure, a connection chamber 6 is arranged on the post 1 for connection, and the connection chamber 6 is configured for an angle corner code connection between two frame bodies, thereby enhancing the connection strength between the frame bodies; in the present disclosure, a support plate 7 is arranged at the other side of the lower end of the post 1, and a through hole is positioned through the support plate 7, the support plate 7 is configured for improving the support performance of the frame body, and the through hole can be remained for subsequent arrangement and treatment, such as functioning as a grounding hole; and in the present disclosure, a reinforcing rib 8 is connected to the post 1 for increasing strength, and the reinforcing rib 8 is configured for increasing the mechanical strength of the frame body.

While embodiments of the present disclosure have been shown and described, it will be understood by those skilled in the art that various changes, modifications, substitutions, and alterations may be made to these embodiments without departing from the principles and spirit of the present disclosure, the scope of which is defined by the appended claims and their equivalents.

## Claims

1. A highly adaptable photovoltaic module frame structure, comprising a frame body, wherein the frame body comprises a post (1), an insert block (2) is arranged at a lower end of the post (1), a clamping block (3) is arranged above the post (1) at the same side as the insert block (2), a clamping slot (4) is arranged below the clamping block (3), and a groove (5) is arranged above the insert block (2).

2. The highly adaptable photovoltaic module frame structure according to claim 1, wherein a connection chamber (6) is arranged on the post (1) for connection.

3. The highly adaptable photovoltaic module frame structure according to claim 1, wherein dense teeth (21) are arranged on the insert block (2) for increasing friction.

4. The highly adaptable photovoltaic module frame structure according to claim 1, wherein a support plate (7) is arranged at the other side of the lower end of the post (1).

5. The highly adaptable photovoltaic module frame structure according to claim 4, wherein a through hole is positioned through the support plate (7).

6. The highly adaptable photovoltaic module frame structure according to claim 1, wherein a reinforcing rib (8) is connected to the post (1) for increasing strength.

7. The highly adaptable photovoltaic module frame structure according to claim 6, wherein the reinforcing rib (8) has a linear, arc-shaped, or cross-shaped structure.

8. The highly adaptable photovoltaic module frame structure according to claim 1, wherein an arc is arranged below an opening of the clamping slot (4).

9. An implementation method of the highly adaptable photovoltaic module frame structure according to any one of claims 1-8, comprising the following steps:
(i), the insert block (2) being configured for embedding in a building structure such as a greenhouse, a shed, or a glass house, or configured for positioning of an installation press block, and the groove (5) provides space for installation;
(ii), the teeth (21) being configured for increasing the friction after nesting with a building structure or the friction with the installation press block;
(iii), the reinforcing rib (8) being configured for increasing the mechanical strength of the frame body;
(iv), the support plate (7) being configured for improving the support performance of the frame body; and
(v), the clamping slot (4) being configured for clamping the photovoltaic module.

10. The implementation method of the highly adaptable photovoltaic module frame structure according to claim 9, wherein a connection chamber (6) is arranged on the post (1) for connection; dense teeth (21) are arranged on the insert block (2) for increasing friction; a support plate (7) is arranged at the other side of the lower end of the post (1); a through hole is positioned through the support plate (7); a reinforcing rib (8) is connected to the post (1) for increasing strength; the reinforcing rib (8) has a linear, arc-shaped, or cross-shaped structure; and an arc is arranged below an opening of the clamping slot (4).
